# EUROPÄISCHE PATENTSCHRIFT

(11) **EP 3 235 340 B1**
(45) Veröffentlichungstag und Bekanntmachung des Hinweises auf die Patenterteilung: **15.07.2020**
(21) Anmeldenummer: 15791312.0
(22) Anmeldetag: 10.11.2015
(51) Int. Cl.: H05B 3/84, H01R 4/02, H01R 4/72

(54) **SCHEIBE MIT EINEM ELEKTRISCHEN ANSCHLUSSELEMENT UND EINEM FLEXIBLEN ANSCHLUSSKABEL**
PANE WITH AN ELECTRICAL CONNECTION ELEMENT AND A FLEXIBLE CONNECTION CABLE
VITRE DOTÉ D'UN ÉLÉMENT DE RACCORDEMENT ÉLECTRIQUE ET CÂBLE DE RACCORDEMENT SOUPLE

(30) Priorität: 16.12.2014 EP 14198186
(43) Veröffentlichungstag der Anmeldung: 25.10.2017
(73) Patentinhaber: SAINT-GOBAIN GLASS FRANCE, 92400 Courbevoie (FR)
(72) Erfinder: REUL, Bernhard, 52134 Herzogenrath (DE); RATEICZAK, Mitja, 52146 Würselen (DE); SCHMALBUCH, Klaus, 84220 Goult (FR)
(74) Vertreter: Gebauer, Dieter Edmund
(86) Internationale Anmeldenummer: PCT/EP2015/076186
(87) Internationale Veröffentlichungsnummer: WO 2016/096248

(56) Entgegenhaltungen:
- DE-A1- 3 344 091
- DE-C1- 4 439 645
- DE-U1-202013 006 781

## Beschreibung

Die Erfindung betrifft eine Scheibe mit einem elektrischen Anschlusselement und einem flexiblen Anschlusskabel, ein Verfahren zu deren Herstellung sowie deren Verwendung.

Die Erfindung betrifft weiter eine Scheibe mit einem elektrischen Anschlusselement für Fahrzeuge mit elektrisch leitfähigen Strukturen wie beispielsweise Heizleitern oder Antennenleitern. Die elektrisch leitfähigen Strukturen sind üblicherweise mit angelöteten elektrischen Anschlusselementen versehen, welche über Verbindungskabel mit der Bordelektrik verbunden sind.

Die Verbindungskabel zur Bordelektrik sind typischerweise nicht direkt mit den Anschlusselementen verbunden. Stattdessen sind die Anschlusselemente mit vergleichsweise kurzen Anschlussteilen versehen, welche üblicherweise mit einem Steckverbinder ausgestattet sind. Die Scheiben können mit den Anschlusselementen samt Anschlussteilen vorkonfektioniert hergestellt werden. Beim Einbau in die Fahrzeugkarosserie können die Anschlussteile der Anschlusselemente dann sehr einfach und zeitsparend mit den Verbindungskabeln zur Bordelektrik verbunden werden, insbesondere mittels einer Steckverbindung.

Das Anschlussteil kann ein steifes Element sein. Ein Beispiel für ein steifes Anschlussteil mit Steckverbinder ist aus EP 1488972 A1 bekannt - es sind aber auch zahlreiche weitere Ausgestaltungen denkbar. Der Vorteil eines steifen Anschlussteils liegt in der einfachen, zeitsparenden und daher für die Massenfertigung besonders geeigneten Anschlussmöglichkeit des Verbindungskabels zur Bordelektrik. Aufgrund der Steifheit kann das Verbindungskabel vom Werker einhändig auf das Anschlussteil aufgesteckt werden. Das steife Anschlussteil ist aber mit dem Nachteil verbunden, dass beim Aufstecken des Verbindungskabels Scher- oder Hebelkräfte auftreten können, welche die Lötverbindung zwischen Anschlusselement und Scheibe belasten.

Die mechanische Belastung der Lötverbindung ist insbesondere bei bleifreien Lotmassen problematisch, welchen in Zukunft eine wachsende Bedeutung zukommen wird. So müssen beispielsweise aufgrund der Altauto-Richtlinie 2000/53/EG innerhalb der EU bleihaltige Lote durch bleifreie Lote ersetzt werden. Bleifreie Lote weisen aber typischerweise eine deutlich geringe Duktilität als bleihaltige Lote und sind häufig deutlich spröder. Daher sind bleifreie Lotmassen nicht in gleichem Maße in der Lage, mechanische Belastungen zu kompensieren.

Um die mechanische Belastung beim Aufstecken des Verbindungskabels infolge von Scher- und Hebelkräften zu vermeiden, können die Anschlussteile als flexible Anschlusskabel ausgebildet sein. Die flexiblen Anschlusskabel können beispielsweise als Flachgewebeband ausgebildet sein, welche mit einem Steckverbinder versehen sind. Anschlusselemente mit flexiblen Anschlusskabeln sind beispielsweise aus DE 4439645 C1 und DE 9013380 U1 bekannt. Scher- und Hebelkräften werden hierdurch zwar vermieden, jedoch lässt sich das Verbindungskabel nicht oder nur schwer einhändig auf das flexible Anschlusskabel aufstecken. In der Regel wird der Werker beide Hände benötigen: eine zum Fixieren des Anschlusskabels und die andere zum Führen des Verbindungskabels. Dies erhöht die fertigungstechnischen Taktzeiten und ist daher nachteilig für die industrielle Massenfertigung.

Vor diesem Hintergrund liegt der vorliegenden Erfindung die Aufgabe zugrunde, eine verbesserte Scheibe mit elektrischem Anschlusselement und flexiblem Anschlusskabel bereitzustellen. Das Anschlusskabel soll insbesondere dafür geeignet sein, einhändig mit einem Verbindungskabel zu einem externen elektrischen Bauteil, wie einer externen Spannungsversorgung, verbunden zu werden.

Die Aufgabe der vorliegenden Erfindung wird erfindungsgemäß durch eine Scheibe mit einem elektrischen Anschlusselement und Anschlusskabel gemäß dem unabhängigen Anspruch 1 gelöst. Bevorzugte Ausführungen gehen aus den Unteransprüchen hervor.

Durch die kombinierte Wirkung des Versteifungselements und des Schrumpfschlauchs kann das flexible Anschlusskabel mit einer hinreichenden Steifigkeit versehen werden, so dass ein einhändiges Aufstecken eines Verbindungskabels möglich wird. Gleichzeitig kann erreicht werden, dass eine ausreichende Flexibilität bestehen bleibt, so dass im Unterschied zu starren Anschlussteilen kritische Scher- und Hebelkräfte vermieden werden können. Das sind große Verteile der Erfindung.

Der Grad der Steifheit kann je nach den Erfordernissen des Einzelfalls durch die Ausgestaltung des Versteifungselements und des Schrumpfschlauchs eingestellt werden. Die erfindungsgemäße Lösung weist dadurch eine vorteilhaft hohe Flexibilität in der Anwendung auf.

Das Anschlusselement im Sinne der Erfindung ist eine starres, steifes, massives Bauteil, welches mit der elektrisch leitfähigen Struktur verlötet ist. Das Anschlusselement ist bevorzugt einstückig ausgebildet. Das Anschlusselement kann aber grundsätzlich auch mehrstückig ausgebildet sein, also aus zwei oder mehr miteinander verbundenen steifen Einzelteilen bestehen.

Das flexible Anschlusskabel ist ein biegeschlaffes, elektrisch leitfähiges Kabel. Die Verbindung des Anschlusskabels mit dem Anschlusselement erfolgt beispielsweise mittels Löten, Schweißen, Kleben mittels eines elektrisch leitfähigen Klebers, Crimpen, Klemmen oder anderer, dem Fachmann an sich geläufiger Methoden. Das Anschlusskabel kann auch mit einer Aderendhülse oder einem Crimp (um das Anschlusskabel gecrimptes Metallteil) versehen sein, welcher mit dem Anschlusselement verbunden ist.

Das Anschlusskabel muss nicht entlang seiner gesamten Länge mit dem Versteifungselement versehen sein. Zumindest ein Bereich des Anschlusskabels ist mit dem Versteifungselement versehen. Das Anschlusskabel ist also erfindungsgemäß zumindest abschnittsweise mit dem Versteifungselement versehen. Vorteilhafterweise sollte aber der Großteil des Anschlusskabels mit dem Versteifungselement versehen sein.

Das Versteifungselement weist in einer vorteilhaften Ausgestaltung eine Länge von mindestens 50 % der Länge des Anschlusskabels auf, besonders vorteilhaft mindestens 80 %. Das Versteifungselement weist bevorzugt eine Länge von 50% bis 100% der Länge des Anschlusskabels auf, besonders bevorzugt von 80% bis 100%. Damit wird eine vorteilhafte Versteifung erreicht. Anders ausgedrückt ist das Anschlusskabel bevorzugt entlang von mindestens 50% seiner Länge, insbesondere 50% bis 100%, besonders bevorzugt mindestens 80% seiner Länge, insbesondere 80% bis 100%, mit dem Versteifungselement versehen.

Das Anschlusskabel ist bevorzugt als Drahtlitzenleiter-Rundkabel oder als Flachgewebeband ausgebildet. Das Versteifungselement ist bevorzugt als Isolationshülle oder als Verstärkungsschiene ausgebildet.

Das Anschlusskabel weist in einer vorteilhaften Ausgestaltung eine Länge von größer als 2 cm auf, bevorzugt größer als 3 cm, besonders bevorzugt größer als 4 cm, ganz besonders bevorzugt größer als 5 cm. In einer weiteren vorteilhaften Ausgestaltung weist das Anschlusskabel eine Länge von größer als 10 cm auf. Bei Anschlusskabeln mit dieser Mindestlänge wirkt sich die Erfindung in besonderem Maße vorteilhaft aus. Sehr kurze Anschlusskabel ermöglichen eventuell schon allein aufgrund ihrer geringen Länge einen einhändigen Anschluss des Verbindungskabels, während sich mit steigender Länge die Flexibilität des Anschlusskabels als zunehmend störend erweist. Anschlusskabel mit den angegebenen Mindestlängen profitieren in besonderem Maße von den Vorteilen der erfindungsgemäßen Versteifung.

Das Anschlusskabel weist bevorzugt eine Länge von kleiner als 20 cm auf.

In einer ersten bevorzugten Ausgestaltung der Erfindung ist das Anschlusskabel ein als Rundkabel ausgebildeter Drahtlitzenleiter und das Versteifungselement eine Isolationshülle, insbesondere polymere Isolationshülle. Rundkabel werden üblicherweise mit einer polymeren Isolationshülle vertrieben, welche in dieser Ausgestaltung ohne großen Mehraufwand als Versteifungselement ausgenutzt wird. Die Ausgestaltung ist daher vorteilhaft einfach und kostengünstig zu realisieren.

Die Isolationshülle enthält bevorzugt Polyethylen (PE), Polypropylen (PP), Polyisobutylen (PIB), Polybutylen (PB), Polyvinylchlorid (PVC), Polytetrafluorethylen (PTFE), Polyethylenterephthalat (PET), Polyurethan (PU), synthetischen Kautschuk oder Naturgummi. Die Isolationshülle kann aber auch andere geeignete isolierende Materialien enthalten.

Die Isolationshülle ist bevorzugt entlang der gesamten Länge des Anschlusskabels angeordnet, mit Ausnahme der je nach Bedarf abisolierten Enden.

In einer zweiten bevorzugten Ausgestaltung der Erfindung ist das Anschlusskabel ein Flachgewebeband und das Versteifungselement eine Verstärkungsschiene. Ein Flachgewebeband wird auch beispielsweise als geflochtener Drahtlitzenleiter oder *woven wire* bezeichnet. Ein Flachgewebeband weist beispielsweise eine Dicke von 0,5 mm bis 2 mm auf und eine Breite von 3 mm bis 10 mm.

Die Verstärkungsschiene enthält bevorzugt ein Metall oder eine Metalllegierung, besonders bevorzugt Stahl, Edelstahl, Kupfer, Aluminium, Silber, Gold, Wolfram, Zink oder Messing. Die Verwendung elektrisch leitfähiger Materialien für die Verstärkungsschiene hat den Vorteil, dass neben der versteifenden Wirkung auch die Stromtragfähigkeit des Anschlusskabels erhöht wird. Hierfür eignen sich in besonderem Maße Kupfer, Aluminium, Silber, Gold, Wolfram, Zink oder Messing. Die Verstärkungsschiene ist insbesondere aus einem Blech gefertigt. Die Verstärkungsschiene weist bevorzugt eine Materialstärke von 0,1 mm bis 2 mm, besonders bevorzugt von 0,2 mm bis 1 mm auf. Dies ist besonders vorteilhaft für die versteifende Wirkung der Verstärkungsschiene.

Die Verstärkungsschiene weist in einer vorteilhaften Ausgestaltung eine Länge von mindestens 50 % der Länge des Anschlusskabels auf, besonders vorteilhaft mindestens 80 %. Die Verstärkungsschiene weist bevorzugt eine Länge von 50% bis 100% der Länge des Anschlusskabels auf, besonders bevorzugt von 80% bis 100%. Damit wird eine vorteilhafte Versteifung erreicht. Anders ausgedrückt ist das Anschlusskabel bevorzugt entlang von mindestens 50% seiner Länge, insbesondere 50% bis 100%, besonders bevorzugt mindestens 80% seiner Länge, insbesondere 80% bis 100%, mit der Verstärkungsschiene versehen.

Die Verstärkungsschiene kann als einzelner Streifen ausgebildet sein. Die Verstärkungsschiene kann aber auch andere Formen aufweisen. So kann die Verstärkungsschiene beispielsweise als U-Profil ausgebildet sein, in das das Anschlusskabel eingelegt wird.

Das Anschlusskabel kann an die Verstärkungsschiene angelegt sein. Alternativ kann die Verstärkungsschiene auch in das Anschlusskabel eingelagert sein.

Das Anschlusskabel kann auch mehr als eine Verstärkungsschiene aufweisen, beispielsweise zwei Verstärkungsschienen, die an gegenüberliegenden Seiten des Anschlusskabels angeordnet sind.

Die Verstärkungsschiene kann mit lokalen Verbreiterungen oder Ausbuchtungen versehen sein. Diese führen zu einer Verdickung des mit dem Schrumpfschlauch überzogenen Anschlusskabels mit Versteifungselement, welche dazu genutzt werden können, das Anschlusskabels am Einsatzort der Scheibe, beispielsweise in einer Fahrzeugkarosserie, zu fixieren. Die Verdickung kann dazu beispielsweise in eine geeignete Klemmfassung eingesteckt werden. Durch das Fixieren kann insbesondere ein Klappern des Anschlusskabels während der Fahrt vermieden werden und die Gefahr einer Beschädigung des Anschlusskabels verringert werden.

Durch den Schrumpfschlauch wird die Verstärkungsschiene zuverlässig am Anschlusskabel fixiert. Die Verstärkungsschiene kann aber durch zusätzliche Maßnahmen am Anschlusskabel befestigt sein, beispielsweise durch Crimpen oder Kleben.

Der Schrumpfschlauch enthält bevorzugt zumindest ein thermoplastisches Polymer, besonders bevorzugt Polyolefine (wie PE, PP, PB oder PIB), PVC, Polyvinylidenfluorid (PVDF), PTFE oder Fluorkautschuk (FKM). Der Schrumpfschlauch weist bevorzugt eine Wandstärke (nach Schrumpfung) auf von 0,2 mm bis 2 mm..

Der Schrumpfschlauch ist bevorzugt entlang von mindestens 80% der Länge des Anschlusskabels angeordnet, besonders bevorzugt mindestens 90%. Der Schrumpfschlauch ist in einer besonders vorteilhaften Ausgestaltung entlang der gesamten Länge des Anschlusselements angeordnet. Der Schrumpfschlauch kann außer dem Anschlusskabel auch andere Bauteile umgeben, beispielsweise einen Bereich des Anschlusselements oder einen Bereich eines mit dem Anschlusskabel verbundenen Steckverbinders.

Erfindungsgemäß wird das Anschlusskabel durch das Versteifungselement mit einer ausreichenden Steifigkeit versehen, so dass es, wenn es in einen bestimmten Winkel zur Lötfläche des Anschlusselements gebracht wird, diesen Anstellwinkel selbstständig beibehält. Die Lötfläche ist dabei diejenige meist plane Fläche des Anschlusselements, welche mittels der Lotmasse mit der elektrisch leitfähigen Struktur auf dem Substrat verbunden ist. Der Anstellwinkel zu den Lötflächen entspricht daher typischerweise in etwa dem Anstellwinkel zur Substratoberfläche. In diesem Sinne realisierbare, das heißt selbstständig stabile Anstellwinkel liegen bevorzugt mindestens im Bereich von 30° bis 60°, bevorzugt von 20° bis 70°. Das ist besonders vorteilhaft im Hinblick auf ein einhändiges Aufstecken des Verbindungskabels während der Massenfertigung.

In einer vorteilhaften Ausgestaltung weist das Anschlusskabel an seinem vom Anschlusselement abgewandten Ende einen Stecker auf. Der Stecker ist in einer bevorzugten Ausgestaltung ein normierter Kraftfahrzeugflachstecker. Der Kraftfahrzeugflachstecker weist bevorzugt eine Höhe von 0,8 mm und eine Breite von 4,8 mm, 6,3 mm oder 9,5 mm auf. Die Ausführungsform mit einer Breite von 6,3 mm wird besonders bevorzugt, da dies den in diesem Bereich üblicherweise verwendeten Kraftfahrzeugflachsteckern nach DIN 46244 entspricht. Dadurch ergibt sich eine einfache und auch reversible Möglichkeit, die leitfähige Struktur auf dem Substrat elektrisch zu kontaktieren.

Das Substrat enthält bevorzugt Glas, besonders bevorzugt Kalk-Natron-Glas. Das Substrat ist bevorzugt eine Glasscheibe, insbesondere Fensterscheibe. Das Substrat kann grundsätzlich aber auch andere Glasarten enthalten, beispielsweise Quarzglas oder Borsilikatglas. In einer weiteren bevorzugten Ausgestaltung enthält das Substrat ein Polymer, insbesondere Polycarbonat oder Polymethylmethacrylat. Aufgrund der Gewichtsersparnis werden polymere Materialien für Fensterscheiben zunehmend interessant. Das Substrat kann auch andere Polymere enthalten, beispielsweise Polyethylen, Polypropylen, Polystyrol, Polybutadien, Polynitrile, Polyester, Polyurethan, Polyvinylchlorid, Polyacrylat, Polyamid oder Polyethylenterephthalat.

Das Substrat ist bevorzugt transparent oder transluzent. Das Substrat weist bevorzugt eine Dicke von 0,5 mm bis 25 mm, besonders bevorzugt von 1 mm bis 10 mm und ganz besonders bevorzugt von 1,5 mm bis 5 mm auf.

In einer bevorzugten Ausgestaltung beträgt die Differenz zwischen dem thermischen Ausdehnungskoeffizienten des Substrats und dem thermischen Ausdehnungskoeffizienten des Anschlusselements kleiner als 5 x 10-6/°C, bevorzugt kleiner 3 x 10⁻⁶/°C. Durch eine solch geringe Differenz können kritische thermische Spannungen infolge des Lötvorgangs vorteilhaft vermieden werden und es wird eine bessere Haftung erreicht. Die Vermeidung thermischer Spannungen ist insbesondere bei der Verwendung von bleifreien Lotmassen notwendig, da diese aufgrund ihrer geringen Duktilität mechanische Belastungen weniger gut kompensieren können als bleihaltige Lotmassen.

Der thermische Ausdehnungskoeffizient des Substrats beträgt bevorzugt von 8 x 10⁻⁶/°C bis 9 x 10⁻⁶/°C. Das Substrat enthält bevorzugt Glas, insbesondere Kalk-Natron-Glas, das bevorzugt einen thermischen Ausdehnungskoeffizienten von 8,3 x 10⁻⁶/°C bis 9 x 10⁻⁶/°C in einem Temperaturbereich von 0 °C bis 300 °C aufweist.

Der thermische Ausdehnungskoeffizient des Anschlusselements beträgt in einer vorteilhaften Ausgestaltung von 4 x 10⁻⁶/°C bis 15 x 10⁻⁶/°C, bevorzugt von 9 x 10⁻⁶/°C bis 13 x 10⁻⁶/°C, besonders bevorzugt von 10 x 10⁻⁶/°C bis 11,5 x 10⁻⁶/°C, ganz besonders bevorzugt von 10 x 10⁻⁶/°C bis 11 x 10⁻⁶/°C und insbesondere von 10 x 10⁻⁶/°C bis 10,5 x 10⁻⁶/°C in einem Temperaturbereich von 0 °C bis 300 °C.

Das Anschlusselement enthält bevorzugt zumindest eine eisenhaltige Legierung. Das Anschlusselement enthält besonders bevorzugt zumindest 50 Gew.-% bis 89,5 Gew.-% Eisen, 0 Gew.-% bis 50 Gew.-% Nickel, 0 Gew.-% bis 20 Gew.-% Chrom, 0 Gew.-% bis 20 Gew.-% Kobalt, 0 Gew.-% bis 1,5 Gew.-% Magnesium, 0 Gew.-% bis 1 Gew.-% Silizium, 0 Gew.-% bis 1 Gew.-% Kohlenstoff, 0 Gew.-% bis 2 Gew.-% Mangan, 0 Gew.-% bis 5 Gew.-% Molybdän, 0 Gew.-% bis 1 Gew.-% Titan, 0 Gew.-% bis 1 Gew.-% Niob, 0 Gew.-% bis 1 Gew.-% Vanadium, 0 Gew.-% bis 1 Gew.-% Aluminium und / oder 0 Gew.-% bis 1 Gew.-% Wolfram.

Das Anschlusselement kann beispielsweise eine Eisen-Nickel-Kobalt-Legierung enthalten, wie Kovar (FeCoNi) mit einem thermischen Ausdehnungskoeffizienten von üblicherweise etwa 5 x 10⁻⁶/°C aufweist. Die Zusammensetzung von Kovar ist beispielsweise 54 Gew.-% Eisen, 29 Gew.-% Nickel und 17 Gew.-% Kobalt.

In einer besonders bevorzugten Ausgestaltung enthält das Anschlusselement einen chromhaltigen Stahl. Chromhaltiger, insbesondere sogenannter rostfreier oder nichtrostender Stahl ist kostengünstig verfügbar. Anschlusselemente aus chromhaltigem Stahl weisen zudem im Vergleich zu vielen herkömmlichen Anschlusselementen, beispielsweise aus Kupfer, eine hohe Steifigkeit auf, was zu einer vorteilhaften Stabilität des Anschlusselements führt. Zudem weist chromhaltiger Stahl im Vergleich zu vielen herkömmlichen Anschlusselementen, beispielsweise solchen aus Titan, eine verbesserte Lötbarkeit auf, die sich aus einer höheren Wärmeleitfähigkeit ergibt.

Das Anschlusselement enthält in einer vorteilhaften Ausgestaltung einen chromhaltigen Stahl mit einem Anteil an Chrom von größer oder gleich 5 Gew.-%, bevorzugt größer oder gleich 10,5 Gew.-%. Weitere Legierungsbestandteile wie Molybdän, Mangan oder Niob führen zu einer verbesserten Korrosionsbeständigkeit oder veränderten mechanischen Eigenschaften, wie Zugfestigkeit oder Kaltumformbarkeit.

Das Anschlusselement enthält bevorzugt zumindest 49 Gew.-% bis 95 Gew.-% Eisen, 5 Gew.-% bis 30 Gew.-% Chrom, 0 Gew.-% bis 1 Gew.-% Kohlenstoff, 0 Gew.-% bis 10 Gew.-% Nickel, 0 Gew.-% bis 2 Gew.-% Mangan, 0 Gew.-% bis 5 Gew.-% Molybdän, 0 Gew.-% bis 2 Gew.-% Niob und 0 Gew.-% bis 1 Gew.-% Titan enthält. Das Anschlusselement kann zusätzlich Beimengungen weiterer Elemente enthalten, darunter Vanadium, Aluminium und Stickstoff.

Das Anschlusselement enthält weiter bevorzugt zumindest 57 Gew.-% bis 93 Gew.-% Eisen, 7 Gew.-% bis 25 Gew.-% Chrom, 0 Gew.-% bis 1 Gew.-% Kohlenstoff, 0 Gew.-% bis 8 Gew.-% Nickel, 0 Gew.-% bis 2 Gew.-% Mangan, 0 Gew.-% bis 4 Gew.-% Molybdän, 0 Gew.-% bis 2 Gew.-% Niob und 0 Gew.-% bis 1 Gew.-% Titan enthält. Das Anschlusselement kann zusätzlich Beimengungen weiterer Elemente enthalten, darunter Vanadium, Aluminium und Stickstoff.

Das Anschlusselement enthält besonders bevorzugt zumindest 66,5 Gew.-% bis 89,5 Gew.-% Eisen, 10,5 Gew.-% bis 20 Gew.-% Chrom, 0 Gew.-% bis 1 Gew.-% Kohlenstoff, 0 Gew.-% bis 5 Gew.-% Nickel, 0 Gew.-% bis 2 Gew.-% Mangan, 0 Gew.-% bis 2,5 Gew.-% Molybdän, 0 Gew.-% bis 2 Gew.-% Niob und 0 Gew.-% bis 1 Gew.-% Titan enthält. Das Anschlusselement kann zusätzlich Beimengungen weiterer Elemente enthalten, darunter Vanadium, Aluminium und Stickstoff.

Das Anschlusselement enthält ganz besonders bevorzugt zumindest 73 Gew.-% bis 89,5 Gew.-% Eisen, 10,5 Gew.-% bis 20 Gew.-% Chrom, 0 Gew.-% bis 0,5 Gew.-% Kohlenstoff, 0 Gew.-% bis 2,5 Gew.-% Nickel, 0 Gew.-% bis 1 Gew.-% Mangan, 0 Gew.-% bis 1,5 Gew.-% Molybdän, 0 Gew.-% bis 1 Gew.-% Niob und 0 Gew.-% bis 1 Gew.-% Titan. Das Anschlusselement kann zusätzlich Beimengungen weiterer Elemente enthalten, darunter Vanadium, Aluminium und Stickstoff.

Das Anschlusselement enthält insbesondere zumindest 77 Gew.-% bis 84 Gew.-% Eisen, 16 Gew.-% bis 18,5 Gew.-% Chrom, 0 Gew.-% bis 0,1 Gew.-% Kohlenstoff, 0 Gew.-% bis 1 Gew.-% Mangan, 0 Gew.-% bis 1 Gew.-% Niob, 0 Gew.-% bis 1,5 Gew.-% Molybdän und 0 Gew.-% bis 1 Gew.-% Titan. Das Anschlusselement kann zusätzlich Beimengungen weiterer Elemente enthalten, darunter Vanadium, Aluminium und Stickstoff.

Besonders geeignete chromhaltige Stähle sind Stähle der Werkstoffnummern 1.4016, 1.4113, 1.4509 und 1.4510 nach EN 10 088-2.

Die Erfindung ist nicht auf eine bestimmte Form des Anschlusselements beschränkt. Die Erfindung kann vielmehr auf beliebig geformte Anschlusselemente angewendet werden. Das Anschlusselement kann beispielsweise rund, oval, rechteckig oder brückenförmig ausgeformt sein.

Die Materialstärke des Anschlusselements beträgt bevorzugt von 0,1 mm bis 4 mm, besonders bevorzugt von 0,2 mm bis 2 mm, ganz besonders bevorzugt von 0,5 mm und 1 mm. Die Materialstärke ist bevorzugt konstant, was besonders vorteilhaft im Hinblick auf eine einfache Herstellung ist.

Die Abmessungen des Anschlusselements können vom Fachmann nach den Erfordernissen des Einzelfalls frei gewählt werden. Das Anschlusselement weist beispielsweise eine Länge und eine Breite von 1 mm bis 50 mm auf. Die Länge des Anschlusselements beträgt bevorzugt von bis, besonders bevorzugt von bis. Die Breite des Anschlusselements beträgt bevorzugt von 10 mm bis 30 mm, besonders bevorzugt von 2 mm bis 10 mm. Anschlusselemente mit diesen Abmessungen lassen sich besonders gut handhaben und eignen sich besonders zur elektrischen Kontaktierung leitfähiger Strukturen auf Scheiben. Die erfindungsgemäße Lotmasse ist in einer bevorzugten Ausgestaltung bleifrei. Das ist besonders vorteilhaft im Hinblick auf die Umweltverträglichkeit der erfindungsgemäßen Scheibe mit elektrischem Anschlusselement. Als bleifreie Lotmasse ist im Sinne der Erfindung eine Lotmasse zu verstehen, welche entsprechend der EG-Richtlinie "2002/95/EG zur Beschränkung der Verwendung bestimmter gefährlicher Stoffe in Elektro- und Elektronikgeräten" einen Anteil von kleiner oder gleich 0,1 Gew.-% Blei, bevorzugt kein Blei enthält.

Die Erfindung ist in besonderem Maße für die Verwendung bleifreier Lotmassen geeignet. Die erfindungsgemäße Versteifung des Anschlusskabels ermöglicht einen einfachen und zeitsparenden Anschluss des Verbindungskabels zur Bordelektrik. Andererseits ist das Anschlusskabel aber weiterhin ausreichend flexibel, so dass Scher- und Hebelkräfte vermieden werden können, welche die mechanische Verbindung zwischen Anschlusselement und Substrat belasten. Solche Scher- und Hebelkräfte können insbesondere bei bleifreien Lotmassen die Lötverbindung beschädigen, da diese meist weniger duktil sind als herkömmliche bleihaltige Lotmassen.

Die Lotmasse enthält bevorzugt Zinn und Wismut, Indium, Zink, Kupfer, Silber oder Zusammensetzungen davon. Der Anteil an Zinn in der erfindungsgemäßen Lotzusammensetzung beträgt von 3 Gew.-% bis 99,5 Gew.-%, bevorzugt von 10 Gew.-% bis 95,5 Gew.-%, besonders bevorzugt von 15 Gew.-% bis 60 Gew.-%. Der Anteil an Wismut, Indium, Zink, Kupfer, Silber oder Zusammensetzungen davon beträgt in der erfindungsgemäßen Lotzusammensetzung von 0,5 Gew.-% bis 97 Gew.-%, bevorzugt 10 Gew.-% bis 67 Gew.-%, wobei der Anteil an Wismut, Indium, Zink, Kupfer oder Silber 0 Gew.-% betragen kann. Die Lotzusammensetzung kann Nickel, Germanium, Aluminium oder Phosphor mit einem Anteil von 0 Gew.-% bis 5 Gew.-% enthalten. Die erfindungsgemäße Lotzusammensetzung enthält ganz besonders bevorzugt Bi40Sn57Ag3, Sn40Bi57Ag3, Bi59Sn40Ag1, Bi57Sn42Ag1, In97Ag3, Sn95,5Ag3,8Cu0,7, Bi67In33, Bi33In50Sn17, Sn77,2In20Ag2,8, Sn95Ag4Cu1, Sn99Cu1, Sn96,5Ag3,5, Sn96,5Ag3Cu0,5, Sn97Ag3 oder Gemische davon.

In einer vorteilhaften Ausgestaltung enthält die Lotmasse Wismut. Es hat sich gezeigt, dass eine Wismut-haltige Lotmasse zu einer besonders guten Haftung des erfindungsgemäßen Anschlusselements an der Scheibe führt, wobei Beschädigungen der Scheibe vermieden werden können. Der Anteil des Wismuts an der Lotmassenzusammensetzung beträgt bevorzugt von 0,5 Gew.-% bis 97 Gew.-%, besonders bevorzugt von 10 Gew.-% bis 67 Gew.-% und ganz besonders bevorzugt von 33 Gew.-% bis 67 Gew.-%, insbesondere von 50 Gew.-% bis 60 Gew.-%. Die Lotmasse enthält neben Wismut bevorzugt Zinn und Silber oder Zinn, Silber und Kupfer. In einer besonders bevorzugten Ausgestaltung enthält die Lotmasse zumindest 35 Gew.-% bis 69 Gew.-% Wismut, 30 Gew.-% bis 50 Gew.-% Zinn, 1 Gew.-% bis 10 Gew.-% Silber und 0 Gew.-% bis 5 Gew.-% Kupfer. In einer ganz besonders bevorzugten Ausgestaltung enthält die Lotmasse zumindest 49 Gew.-% bis 60 Gew.-% Wismut, 39 Gew.-% bis 42 Gew.-% Zinn, 1 Gew.-% bis 4 Gew.-% Silber und 0 Gew.-% bis 3 Gew.-% Kupfer.

In einer weiteren vorteilhaften Ausgestaltung enthält die Lotmasse von 90 Gew.-% bis 99,5 Gew.-% Zinn, bevorzugt von 95 Gew.-% bis 99 Gew.-%, besonders bevorzugt von 93 Gew.-% bis 98 Gew.-%. Die Lotmasse enthält neben Zinn bevorzugt von 0,5 Gew.-% bis 5 Gew.-% Silber und von 0 Gew.-% bis 5 Gew.-% Kupfer.

Die Schichtdicke der Lotmasse ist bevorzugt kleiner oder gleich 6.0 x 10⁻⁴ m, besonders bevorzugt kleiner 3.0 x 10⁻⁴ m.

Die Lotmasse tritt mit einer Austrittsbreite von bevorzugt kleiner 1 mm aus dem Zwischenraum zwischen der Lötfläche des Anschlusselements und der elektrisch leitfähigen Struktur aus. In einer bevorzugten Ausgestaltung ist die maximale Austrittsbreite kleiner 0,5 mm und insbesondere etwa 0 mm. Das ist besonders vorteilhaft im Hinblick auf die Reduzierung von mechanischen Spannungen in der Scheibe, die Haftung des Anschlusselements und die Einsparung des Lots. Die maximale Austrittsbreite ist definiert als der Abstand zwischen den Außenkanten des Lötbereichs und der Stelle des Lotmasseübertritts, an dem die Lotmasse eine Schichtdicke von 50 µm unterschreitet. Die maximale Austrittsbreite wird nach dem Lötvorgang an der erstarrten Lotmasse gemessen. Eine gewünschte maximale Austrittsbreite wird durch eine geeignete Wahl von Lotmassenvolumen und lotrechtem Abstand zwischen Anschlusselement und elektrisch leitfähiger Struktur erreicht, was durch einfache Versuche ermittelt werden kann. Der lotrechte Abstand zwischen Anschlusselement und elektrisch leitfähiger Struktur kann durch ein entsprechendes Prozesswerkzeug, beispielsweise ein Werkzeug mit einem integrierten Abstandshalter, vorgegeben werden. Die maximale Austrittsbreite kann auch negativ sein, also in den vom Lötbereich des elektrischen Anschlusselements und elektrisch leitfähiger Struktur gebildeten Zwischenraum zurückgezogen sein. In einer vorteilhaften Ausgestaltung der erfindungsgemäßen Scheibe ist die maximale Austrittsbreite in dem vom Lötbereich des elektrischen Anschlusselements und der elektrisch leitfähigen Struktur gebildeten Zwischenraum in einem konkaven Meniskus zurückgezogen. Ein konkaver Meniskus entsteht beispielsweise durch Erhöhen des lotrechten Abstands zwischen Abstandshalter und leitfähiger Struktur beim Lötvorgang, während das Lot noch flüssig ist. Der Vorteil liegt in der Reduzierung der mechanischen Spannungen in der Scheibe, insbesondere im kritischen Bereich, der bei einem großen Lotmasseübertritt vorliegt.

Die erfindungsgemäße elektrisch leitfähige Struktur weist bevorzugt eine Schichtdicke von 5 µm bis 40 µm, besonders bevorzugt von 5 µm bis 20 µm, ganz besonders bevorzugt von 8 µm bis 15 µm und insbesondere von 10 µm bis 12 µm auf. Die erfindungsgemäße elektrisch leitfähige Struktur enthält bevorzugt Silber, besonders bevorzugt Silberpartikel und Glasfritten, insbesondere in Form einer aufgedruckten und eingebrannten Paste.

In einer vorteilhaften Weiterbildung weist die Lötfläche Anschlusselements Abstandshalter auf. Die Abstandshalter sind bevorzugt einstückig mit dem Anschlusselement ausgebildet, beispielsweise durch Prägen oder Tiefziehen. Die Abstandshalter haben bevorzugt eine Breite von 0,5 x 10⁻⁴ m bis 10 x 10⁻⁴ m und eine Höhe von 0,5 x 10⁻⁴ m bis 5 x 10⁻⁴ m, besonders bevorzugt von 1 x 10⁻⁴ m bis 3 x 10⁻⁴ m. Durch die Abstandshalter wird eine homogene, gleichmäßig dicke und gleichmäßig aufgeschmolzene Schicht der Lotmasse erreicht. Dadurch können mechanische Spannungen zwischen Anschlusselement und Scheibe verringert werden und die Haftung des Anschlusselements verbessert werden. Das ist insbesondere bei der Verwendung bleifreier Lotmassen besonders vorteilhaft, die aufgrund ihrer geringeren Duktilität im Vergleich zu bleihaltigen Lotmassen mechanische Spannungen weniger gut kompensieren können.

In einer vorteilhaften Weiterbildung kann auf der vom Substrat abgewandten Oberfläche des Anschlusselements zumindest eine Kontakterhebung angeordnet sein, welche der Kontaktierung des Anschlusselements mit dem Lötwerkzeug während des Lötvorgangs dient. Die Kontakterhebung ist bevorzugt zumindest im Bereich der Kontaktierung mit dem Lötwerkzeug konvex gekrümmt ausgeformt. Die Kontakterhebung hat bevorzugt eine Höhe von 0,1 mm bis 2 mm, besonders bevorzugt von 0,2 mm bis 1 mm. Die Länge und Breite der Kontakterhebung beträgt bevorzugt zwischen 0,1 und 5 mm, ganz besonders bevorzugt zwischen 0,4 mm und 3 mm. Die Kontakterhebungen sind bevorzugt einstückig mit dem Anschlusselement ausgebildet, beispielsweise durch Prägen oder Tiefziehen. Zum Löten können Elektroden verwendet werden, deren Kontaktseite flach ausgeformt ist. Die Elektrodenfläche wird mit der Kontakterhebung in Kontakt gebracht. Die Elektrodenfläche ist dabei parallel zur Oberfläche des Substrats angeordnet. Der Kontaktbereich zwischen Elektrodenfläche und Kontakterhebung bildet die Lötstelle. Die Position der Lötstelle wird dabei durch den Punkt auf der konvexen Oberfläche der Kontakterhebung bestimmt, der den größten lotrechten Abstand zur Oberfläche des Substrats aufweist. Die Position der Lötstelle ist unabhängig von der Position der Lötelektrode auf dem Anschlusselement. Das ist besonders vorteilhaft im Hinblick auf eine reproduzierbare, gleichmäßige Wärmeverteilung während des Lötvorgangs. Die Wärmeverteilung während des Lötvorgangs wird durch die Position, die Größe, die Anordnung und die Geometrie der Kontakterhebung bestimmt.

Das Anschlusselement kann eine Beschichtung (Benetzungsschicht) aufweisen, die beispielsweise Nickel, Kupfer, Zink, Zinn, Silber, Gold oder Legierungen oder Schichten davon enthält, bevorzugt Silber. Dadurch wird eine verbesserte Benetzung des Anschlusselements mit der Lotmasse und eine verbesserte Haftung des Anschlusselements erreicht. Zudem kann durch eine solche Beschichtung die elektrische Leitfähigkeit des Anschlusselements erhöht werden.

In einer vorteilhaften Ausgestaltung ist das Anschlusselement mit einer haftvermittelnden Schicht, bevorzugt aus Nickel und/oder Kupfer, und zusätzlich mit einer Schicht enthaltend Silber versehen. Das erfindungsgemäße Anschlusselement ist ganz besonders bevorzugt mit 0,1 µm bis 0,3 µm Nickel und darauf 3 µm bis 20 µm Silber beschichtet.

Die Form des elektrischen Anschlusselementes kann ein oder mehrere Lotdepots im Zwischenraum von Anschlusselement und elektrisch leitfähiger Struktur ausbilden. Die Lotdepots und Benetzungseigenschaften des Lotes am Anschlusselement verhindern den Austritt der Lotmasse aus dem Zwischenraum. Lotdepots können rechtwinklig, verrundet oder polygonal ausgestaltet sein.

Die Erfindung umfasst außerdem ein Verfahren zur Herstellung einer erfindungsgemäßen Scheibe mit mindestens einem elektrischen Anschlusselement, wobei
a)
   - das Anschlusskabel mit dem Versteifungselement und dem Schrumpfschlauch versehen und mit dem Anschlusselement verbunden wird und
   - Lotmasse am Anschlusselement angebracht wird,
b) das Anschlusselement auf der elektrisch leitfähigen Struktur auf dem Substrat angeordnet wird und
c) das Anschlusselement über die Lotmasse mit der elektrisch leitfähigen Struktur unter Energieeintrag verbunden wird.

Verfahrensschritt (a) ist nicht auf eine bestimmte Reihenfolge der Einzelschritte festgelegt. Das Anbringen der Lotmasse kann vor oder nach, prinzipiell auch zeitgleich mit dem Anbringen des Anschlusskabels erfolgen. Auch das Verbinden des Anschlusskabels mit dem Anschlusselement, das Anbringen des Versteifungselements am Anschlusskabel und das Anbringen des Schrumpfschlauchs kann in beliebiger Reihenfolge erfolgen. So kann das Anschlusskabel beispielsweise mit dem Versteifungselement bereitgestellt werden, dann am Anschlusselement angebracht werden und anschließend mit dem Schrumpfschlauch versehen werden. Alternativ kann beispielsweise das Anschlusskabel am Anschlusselement befestigt werden und dann das Versteigungselement am Anschlusskabel angebracht und danach der Schrumpfschlauch befestigt werden.

Das Verbinden des Anschlusskabels mit dem Schrumpfschlauch beinhaltet typischerweise einen Schritt des Erwärmens, was zum Schrumpfen des Schrumpfschlauchs und damit zur dauerhaft stabilen Verbindung führt.

Die Lotmasse wird bevorzugt als Plättchen oder abgeflachter Tropfen mit festgelegter Schichtdicke, Volumen, Form und Anordnung auf dem Anschlusselement angebracht. Die Schichtdicke des Lotmasseplättchens beträgt bevorzugt kleiner oder gleich 0,6 mm. Die Form des Lotmasseplättchens richtet sich bevorzugt nach der Form der Lötfläche des Anschlusselementes und ist beispielsweise rechteckig, kreisförmig, oval oder rechteckig mit abgerundeten Ecken oder rechteckig mit an zwei gegenüberliegenden Seiten angesetzten Halbkreisen.

Das Einbringen der Energie beim elektrischen Verbinden von elektrischem Anschlusselement und elektrisch leitfähiger Struktur erfolgt bevorzugt mit Stempellöten, Thermodenlöten, Kolbenlöten, Laserlöten, Heißluftlöten, Induktionslöten, Widerstandslöten und/oder mit Ultraschall.

Die elektrisch leitfähige Struktur kann durch an sich bekannte Verfahren auf das Substrat aufgebracht werden, beispielsweise durch Siebdruck-Verfahren.

Die Erfindung umfasst außerdem die Verwendung einer erfindungsgemäßen Scheibe mit mindestens einem elektrischen Anschlusselement in Gebäuden oder in Fortbewegungsmitteln für den Verkehr auf dem Lande, in der Luft oder zu Wasser, insbesondere in Schienenfahrzeugen oder Kraftfahrzeugen, bevorzugt als Windschutzscheibe, Heckscheibe, Seitenscheibe und / oder Dachscheibe, insbesondere als beheizbare Scheibe oder als Scheibe mit Antennenfunktion.

Die Erfindung wird anhand einer Zeichnung und Ausführungsbeispielen näher erläutert.. Die Zeichnung ist eine schematische Darstellung und nicht maßstabsgetreu. Die Zeichnung schränkt die Erfindung in keiner Weise ein. Es zeigen:
- Fig. 1: eine perspektivische Ansicht einer Ausgestaltung der erfindungsgemäßen Scheibe mit elektrischem Anschlusselement und flexiblem Anschlusskabel,
- Fig. 2: einen Querschnitt durch die Scheibe gemäß Figur 1 entlang der Erstreckungsrichtung des Anschlusskabels,
- Fig. 3: einen Querschnitt durch eine weitere Ausgestaltung der erfindungsgemäßen Scheibe,
- Fig. 4: einen Querschnitt durch das Anschlusskabel senkrecht zu seiner Erstreckungsrichtung in vier Ausgestaltungen der Erfindung,
- Fig. 5: ein Flussdiagramm einer Ausführungsform des erfindungsgemäßen Verfahrens zur Herstellung einer erfindungsgemäßen Scheibe und
- Fig. 6: ein Flussdiagramm einer weiteren Ausführungsform des erfindungsgemäßen Verfahrens.

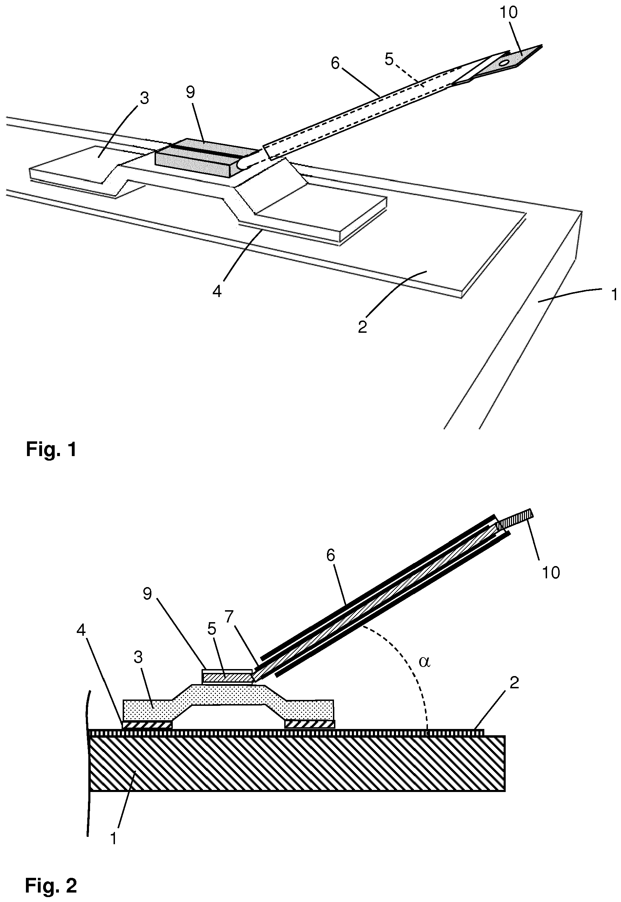

Fig.1 und Fig. 2 zeigen je ein Detail einer erfindungsgemäßen Scheibe im Bereich des elektrischen Anschlusselements 3. Die Scheibe umfasst ein Substrat 1, welches ein 3 mm dickes thermisch vorgespanntes Einscheibensicherheitsglas aus Kalk-Natron- Glas ist. Das Substrat 1 weist beispielsweise eine Breite von 150 cm und eine Höhe von 80 cm auf und ist als Heckscheibe eines Personenkraftwagens vorgesehen. Auf das Substrat 1 ist eine elektrisch leitfähige Struktur 2 in Form einer Heizleiterstruktur aufgedruckt, die Silberpartikel und Glasfritten enthält. Im Randbereich der Scheibe ist die elektrisch leitfähige Struktur 2 auf eine Breite von beispielsweise 10 mm verbreitert und bildet eine Kontaktfläche für das elektrische Anschlusselement 3. Im Randbereich des Substrats 1 befindet sich weiter ein nicht dargestellter Abdecksiebdruck.

Das Anschlusselement 3 ist brückenförmig ausgebildet. Es umfasst zwei Fußbereiche, an deren dem Substrat 1 zugewandten Oberflächen die Lötflächen angeordnet sind. Die Lötflächen sind über eine Lotmasse 4 mit der elektrisch leitfähigen Struktur 2 verbunden. Zwischen den Fußbereichen ist ein verbrückender Bereich angeordnet, der einen erhöhten mittleren Abschnitt enthält, der parallel zu den Fußbereichen angeordnet ist. Der verbrückende Bereich ist nicht direkt über die Lotmasse mit der leitfähigen Struktur verbunden. Das Anschlusselement 3 hat beispielsweise eine Länge von 24 mm, eine Breite von 4 mm und eine Materialstärke von 0,8 mm. Das Anschlusselement 3 besteht aus chromhaltigem Stahl der Werkstoff-Nummer 1.4509 nach EN 10 088-2 (ThyssenKrupp Nirosta® 4509) mit einem thermischen Ausdehnungskoeffizienten von 10,5 x 10⁻⁶/°C im Temperaturbereich von 20°C bis 300°C. Das Kalk-Natron-Glas des Substrats 1 weist einen thermischen Ausdehnungskoeffizienten von etwa 9·x 10⁻⁶/°C auf. Durch die geringe Differenz der Ausdehnungskoeffizienten können kritische thermische Spannungen beim Löten vermieden werden.

Die Lotmasse 4 bewirkt eine dauerhafte elektrische und mechanische Verbindung zwischen dem elektrischen Anschlusselement 3 und der elektrisch leitfähigen Struktur 2. Die Lotmasse 4 ist bleifrei und besteht aus 57 Gew.-% Wismut, 40 Gew.-% Zinn und 3 Gew.-% Silber. Die Lotmasse 4 hat eine Dicke von 250 µm.

Auf dem verbrückenden Bereich des Anschlusselements 3 ist ein flexibles Anschlusskabel 5 angebracht. Das Anschlusskabel 5 ist ein Rundkabel, das Kupferdrahtlitzen enthält. Das Anschlusskabel ist mit einer Isolationshülle 7 aus PE versehen. Das mit dem Anschlusselement 3 verbundene Ende des Anschlusskabels ist abisoliert und mit einem gecrimpten Metallplättchen 9 versehen (B-Crimp). Der Crimp 9 ist mit dem Anschlusselement 3 verschweißt.

Das Anschlusskabel 5 ist dafür vorgesehen, mit einem nicht dargestellten Verbindungskabel zur externen Spannungsversorgung verbunden zu werden. Dazu weist das Anschlusskabel 5 an seinem dem Anschlusselement 3 abgewandten Ende einen Stecker 10 auf, welcher als normierter Kraftfahrzeugflachstecker ausgebildet ist. Die Länge des Anschlusskabels 5 beträgt beispielsweise 6 cm.

Nach dem Einbau der vorgefertigten Scheibe mit Anschlusselement und Anschlusskabel in eine Fahrzeugkarossiere kann die elektrische Kontaktierung erfolgen, indem das Verbindungskabel auf den Stecker 10 aufgesteckt wird. Dieses Aufstecken soll durch den Werker bevorzugt einhändig erfolgen, was zeitsparend ist. Um ein solches einhändiges Aufstecken zu ermöglichen, ist das an sich sehr flexible Anschlusskabel 5 erfindungsgemäß versteift. Die Versteifung erfolgt zum einen durch die Isolationshülle 7, welche als Versteifungselement fungiert. Die Versteifung erfolgt zum anderen durch einen Schrumpfschlauch 6, welcher um das Anschlusskabel 5 samt Isolationshülle 7 abgeordnet ist. Der Schrumpfschlauch 6 besteht aus beispielsweise aus PVC und weist eine Dicke von etwa 0,5 mm auf.

Das Anschlusskabel 5 weist einen Anstellwinkel α zur den Lötflächen des Anschlusselements 3 beziehungsweise zur Substratoberfläche von beispielsweise 45° auf. Dieser Anstellwinkel wird durch das versteifte Anschlusskabel 5 selbstständig stabil gehalten. Der stabile Anstellwinkel α sowie die Versteifung (hohe Verbiegekraft) des Anschlusskabels 5 ermöglichen ein einhändiges Aufstecken des Verbindungskabels zur Bordelektrik. Gleichzeitig ist das Anschlusskabel aber nicht so steif, dass kritische Scher- oder Hebelkräfte die Lotmasse 4 beschädigen. Das sind große Vorteile der vorliegenden Erfindung.

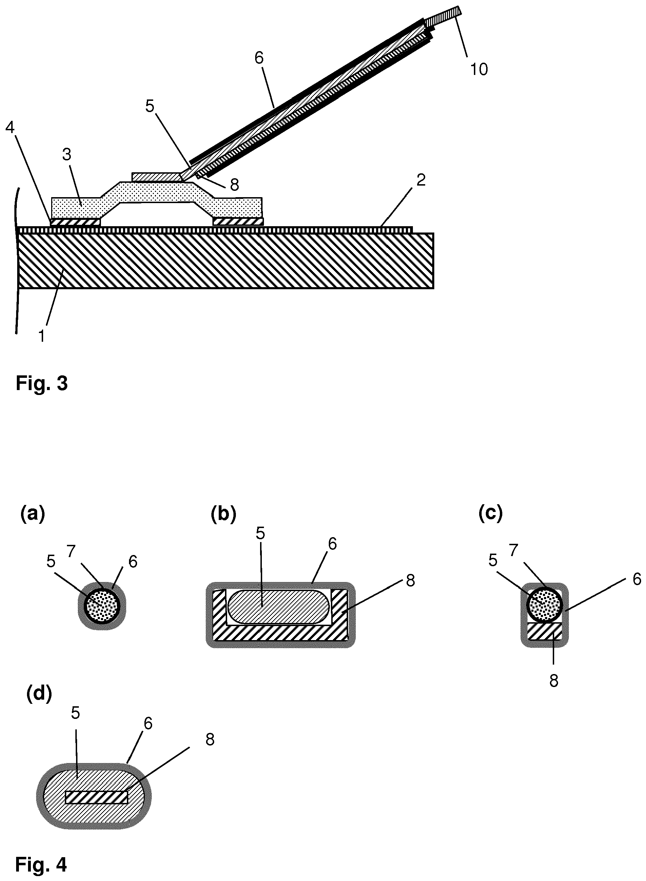

Fig. 3 zeigt einen Querschnitt durch eine weitere Ausgestaltung der erfindungsgemäßen Scheibe im Bereich des elektrischen Anschlusselements 3. Das Substrat 1, die elektrisch leitfähige Struktur 2, das Anschlusselement 3 und die Lotmasse 4 sind wie im vorstehenden Ausführungsbeispiel ausgestaltet.

Das Anschlusskabel 5 ist eine Flachgewebeband aus Kupferlitzen. Die Länge des Anschlusskabels 5 beträgt beispielsweise 11 cm. Ein Ende des Flachgewebebands ist mit dem Anschlusselement 3 elektrisch leitend verbunden, beispielsweise verschweißt, verklebt oder verlötet. Das andere Ende des Flachgewebebands ist mit einem normierten Kraftfahrzeugflachstecker 10 versehen.

Das Anschlusskabel 5 ist mit einer Verstärkungsschiene 8 als Versteifungselement versehen. Die Verstärkungsschiene 8 besteht beispielsweise aus einem Aluminiumblech mit einer Materialstärke von beispielsweise 0,5 mm, welches als U-Profil geformt ist. Das U-Profil ist entsprechend dem Anschlusskabel 5 dimensioniert, welches in das U-Profil eingelegt ist. Die Länge der Verstärkungsschiene 8 beträgt beispielsweise 95% der Länge des Anschlusskabels 5.

Die Verstärkungsschiene 8 ist wiederum mit einem Schrumpfschlauch 6 am Anschlusskabel 5 fixiert. Schrumpfschlauch 6 und Verstärkungsschiene 8 bewirken gemeinsam die erfindungsgemäße Versteifung des Anschlusskabels 5.

Die Verstärkungsschiene 8 könnte alternativ auch um das Anschlusskabel 5 herum gecrimpt sein, wodurch eine noch stabilere Verbindung hergestellt würde.

Fig. 4 zeigt Querschnitte durch das Anschlusskabel 5 senkrecht zu seiner Erstreckungsrichtung in vier Ausgestaltungen der Erfindung.

Teil (a) zeigt die Ausgestaltung der Figur 2 mit dem Rundkabel als Anschlusskabel 5 und der Isolationshülle 7 als Versteifungselement.

Teil (b) zeigt die Ausgestaltung der Figur 3 mit dem Flachgewebeband als Anschlusskabel 5 und der Verstärkungsschiene 8 als Versteifungselement.

Teil (c) zeigt eine weitere Ausgestaltung der Erfindung. Das Anschlusskabel 5 ist ein Rundkabel wie in Teil (a) mit einer Isolationshülle 7 als Versteifungselement. Das Anschlusskabel 5 weist darüber hinaus ein zweites Versteifungselement in Form eine Verstärkungsschiene 8 auf. Die Verstärkungsschiene 8 ist ein einfacher Streifen eines Aluminiumblechs, auf dem das Anschlusskabel 5 mit Isolationshülle 7 angeordnet ist. Das Anschlusskabel 5 mit Isolationshülle 7 und die Verstärkungsschiene 8 sind von einem Schrumpfschlauch 6 umgeben und aneinander fixiert. Die erhöhte Versteifungswirkung durch die Kombination von Isolationshülle und Verstärkungsschiene ist insbesondere bei Anschlusskabeln mit einer Länge von größer als 10 cm sinnvoll.

Teil (d) zeigt eine weitere Ausgestaltung der Erfindung, wobei das Anschlusskabel 5 als Flachgewebeband ausgebildet ist und das Verstärkungselement als Versteifungsschiene 8. Die Versteifungsschiene 8 ist nicht wie in Teil (b) an das Anschlusskabel 5 angelegt, sondern in das Anschlusskabel 5 eingelegt.

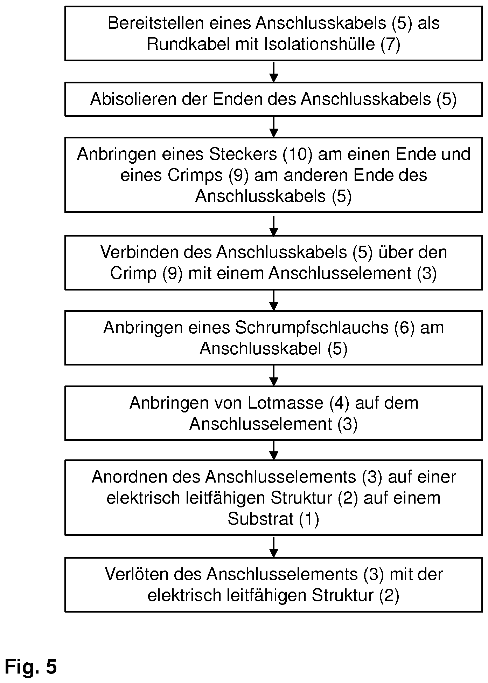

Fig. 5 zeigt ein Ausführungsbeispiel des erfindungsgemäßen Verfahrens zur Herstellung einer Scheibe mit einem elektrischen Anschlusselement 3 und flexiblem Anschlusskabel 5. Das Verfahren führt zur Scheibe gemäß den Figuren 1 und 2.

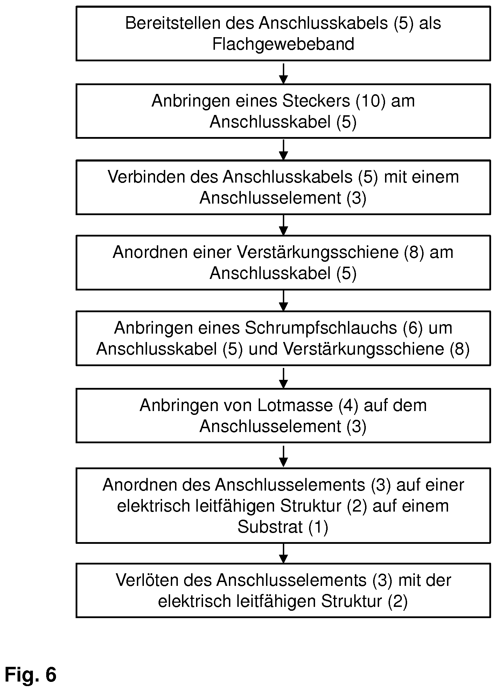

Fig. 6 zeigt ein weiteres Ausführungsbeispiel des erfindungsgemäßen Verfahrens zur Herstellung einer Scheibe mit einem elektrischen Anschlusselement 3 und flexiblem Anschlusskabel 5. Das Verfahren führt zur Scheibe gemäß der Figur 3.

### Bezugszeichenliste

- (1): Substrat
- (2): elektrisch leitfähige Struktur
- (3): elektrisches Anschlusselement
- (4): Lotmasse
- (5): Anschlusskabel
- (6): Schrumpfschlauch
- (7): Isolationshülle
- (8): Verstärkungsschiene
- (9): Crimp
- (10): Stecker

- α: Anstellwinkel von 5

## Patentansprüche

1. Scheibe mit mindestens einem elektrischen Anschlusselement und Anschlusskabel, mindestens umfassend:
- ein Substrat (1),
- eine elektrisch leitfähige Struktur (2) auf einem Bereich des Substrats (1),
- ein Anschlusselement (3), das über eine Lotmasse (4) mit einem Bereich der elektrisch leitfähigen Struktur (2) verbunden ist, und
- ein mit dem Anschlusselement (3) verbundenes flexibles Anschlusskabel (5),
wobei das Anschlusskabel (5) mit einem Versteifungselement (7,8) versehen ist und das Anschlusskabel (5) mit dem Versteifungselement (7,8) von einem Schrumpfschlauch (6) umgeben ist, **dadurch gekennzeichnet, dass** das Anschlusskabel (5) durch das Versteifungselement (7, 8) mit einer solchen Steifigkeit versehen wird, dass es in einen bestimmten Anstellwinkel zu einer Lötfläche des Anschlusselements (3) gebracht werden kann und es diesen Anstellwinkel selbständig beibehält.

2. Scheibe nach Anspruch 1, wobei das Versteifungselement (7,8) eine Länge von mindestens 50% der Länge des Anschlusskabels (5) aufweist, bevorzugt mindestens 80%.

3. Scheibe nach Anspruch 1 oder 2, wobei das Anschlusskabel (5) ein als Rundkabel ausgebildeter Drahtlitzenleiter und das Versteifungselement eine Isolationshülle (7) ist.

4. Scheibe nach Anspruch 1 oder 2, wobei das Anschlusskabel (5) ein Flachgewebeband und das Versteifungselement eine Verstärkungsschiene (8) ist.

5. Scheibe nach Anspruch 4, wobei die Verstärkungsschiene (8) ein Metall oder eine Metalllegierung enthält, bevorzugt Stahl, Edelstahl, Kupfer, Aluminium, Silber, Gold, Wolfram, Zink oder Messing, und eine Materialstärke von 0,1 mm bis 2 mm, bevorzugt von 0,2 mm bis 1mm aufweist.

6. Scheibe nach einem der Ansprüche 1 bis 5, wobei das Anschlusskabel (5) eine Länge von größer als 2 cm aufweist, bevorzugt größer als 3 cm, besonders bevorzugt größer als 4 cm, ganz besonders bevorzugt größer als 5 cm.

7. Scheibe nach einem der Ansprüche 1 bis 6, wobei das Anschlusskabel (5) den Anstellwinkel (α) im Bereich von 30° bis 60° selbstständig beibehält.

8. Scheibe nach einem der Ansprüche 1 bis 7, wobei das Anschlusskabel (5) an seinem vom Anschlusselement (3) abgewandten Ende einen Stecker (10) aufweist.

9. Scheibe nach einem der Ansprüche 1 bis 8, wobei die Differenz zwischen dem thermischen Ausdehnungskoeffizienten des Substrats (1) und dem thermischen Ausdehnungskoeffizienten des Anschlusselements (3) kleiner als 5 x 10⁻⁶/°C ist.

10. Scheibe nach einem der Ansprüche 1 bis 9, wobei das Substrat (1) Glas enthält, bevorzugt Kalk-Natron-Glas.

11. Scheibe nach einem der Ansprüche 1 bis 10, wobei das Anschlusselement (3) eine eisenhaltige Legierung enthält, bevorzugt einen chromhaltigen Stahl.

12. Scheibe nach einem der Ansprüche 1 bis 11, wobei die Lotmasse (4) bleifrei ist.

13. Scheibe nach einem der Ansprüche 1 bis 12, wobei die elektrisch leitfähige Struktur (2) zumindest Silber, bevorzugt Silberpartikel und Glasfritten enthält und eine Schichtdicke von 5 µm bis 40 µm aufweist.

14. Verfahren zur Herstellung einer Scheibe mit mindestens einem elektrischen Anschlusselement nach einem der Ansprüche 1 bis 13, wobei
a)
- das Anschlusskabel (5) mit dem Versteifungselement (7,8) und dem Schrumpfschlauch (6) versehen und mit dem Anschlusselement (3) verbunden wird und
- Lotmasse (4) am Anschlusselement (3) angebracht wird,
b) das Anschlusselement (3) auf der elektrisch leitfähigen Struktur (2) auf dem Substrat (1) angeordnet wird und
c) das Anschlusselement (3) über die Lotmasse (4) mit der elektrisch leitfähigen Struktur (2) unter Energieeintrag verbunden wird.

15. Verwendung einer Scheibe mit mindestens einem elektrischen Anschlusselement nach einem der Ansprüche 1 bis 13, in Gebäuden oder in Fortbewegungsmitteln für den Verkehr auf dem Lande, in der Luft oder zu Wasser, insbesondere in Schienenfahrzeugen oder Kraftfahrzeugen, bevorzugt als Windschutzscheibe, Heckscheibe, Seitenscheibe und / oder Dachscheibe, insbesondere als beheizbare Scheibe oder als Scheibe mit Antennenfunktion.

## Claims

1. Pane with at least one electrical connection element and connection cable, at least comprising:
- a substrate (1),
- an electrically conductive structure (2) on a region of the substrate (1),
- a connection element (3) that is connected via a soldering compound (4) to a region of the electrically conductive structure (2), and
- a flexible connection cable (5) connected to the connection element (3), wherein the connection cable (5) is provided with a stiffening element (7,8) and the connection cable (5) with the stiffening element (7,8) is enshrouded by a heat shrink tube (6), **characterized in that** the connection cable (5) is provided by the stiffening element (7,8) with sufficient stiffness such that when it is brought into a certain arrangement angle relative to a soldering surface of the connection element (3), it independently maintains this arrangement angle.

2. Pane according to claim 1, wherein the stiffening element (7,8) has a length of at least 50% of the length of the connection cable (5), preferably at least 80%.

3. Pane according to claim 1 or 2, wherein the connection cable (5) is a stranded wire conductor implemented as a round cable and the stiffening element is an insulating sheath (7).

4. Pane according to claim 1 or 2, wherein the connection cable (5) it is a flat-weave ribbon and the stiffening element is a reinforcing rail (8).

5. Pane according to claim 4, wherein the reinforcing rail (8) includes a metal or a metal alloy, preferably steel, stainless steel, copper, aluminum, silver, gold, tungsten, zinc, or brass, and has a material thickness of 0.1 mm to 2 mm, preferably of 0.2 mm to 1 mm.

6. Pane according to one of claims 1 through 5, wherein the connection cable (5) has a length greater than 2 cm, preferably greater than 3 cm, particularly preferably greater than 4 cm, most particularly preferably greater than 5 cm.

7. Pane according to one of claims 1 through 6, wherein the connection cable (5) independently maintains the arrangement angle in the range from 30° to 60°.

8. Pane according to one of claims 1 through 7, wherein the connection cable (5) has a plug (10) on its end away from the connection element (3).

9. Pane according to one of claims 1 through 8, wherein the difference between the coefficient of thermal expansion of the substrate (1) and the coefficient of thermal expansion of the connection element (3) is less than 5 x 10⁻⁶/°C.

10. Pane according to one of claims 1 through 9, wherein the substrate (1) contains glass, preferably soda lime glass.

11. Pane according to one of claims 1 through 10, wherein the connection element (3) contains an iron-containing alloy, preferably a chromium-containing steel.

12. Pane according to one of claims 1 through 11, wherein the soldering compound (4) is lead-free.

13. Pane according to one of claims 1 through 12, wherein the electrically conductive structure (2) contains at least silver, preferably silver particles and glass frits and has a layer thickness of 5 µm to 40 µm.

14. Method for producing a pane with at least one electrical connection element according to one of claims 1 to 13, wherein
a)
- the connection cable (5) is provided with the stiffening element (7,8) and the heat shrink tube (6) and connected to the connection element (3), and
- soldering compound (4) is applied on the connection element (3),
b) the connection element (3) is arranged on the electrically conductive structure (2) on the substrate (1), and
c) the connection element (3) is connected via the soldering compound (4) to the electrically conductive structure (2) with energy input.

15. Use of a pane with at least one electrical connection element according to one of claims 1 through 13, in buildings or in means of transportation for travel on land, in the air, or on water, in particular in rail vehicles or motor vehicles, preferably as a windshield, rear window, side window, and/or roof panel, in particular as a heatable pane or as a pane with an antenna function.

## Revendications

1. Vitre avec au moins un élément de connexion électrique et un câble de connexion, comprenant au moins
- un substrat (1),
- une structure conductrice d'électricité (2) sur une zone du substrat (1),
- un élément de raccordement (3) qui est relié à une zone de la structure conductrice d'électricité (2) par l'intermédiaire d'une masse de soudure (4), et
- un câble de raccordement flexible (5) relié à l'élément de raccordement (3),
où le câble de raccordement (5) est muni d'un élément de raidissement (7, 8) et le câble de raccordement (5) avec l'élément de raidissement (7, 8) est entouré par un tube rétractable (6), **caractérisé en ce que** le câble de raccordement (5) est doté d'une rigidité telle par l'élément de raidissement (7, 8) qu'il est placé à un certain angle d'attaque par rapport à une surface de soudure de l'élément de raccordement (3) et il maintient automatiquement cet angle d'attaque.

2. Vitre selon la revendication 1, où l'élément de raidissement (7, 8) a une longueur d'au moins 50% de la longueur du câble de connexion (5), de préférence au moins 80%.

3. Vitre selon la revendication 1 ou 2, où le câble de connexion (5) est un conducteur toronné conçu comme un câble rond et l'élément de raidissement est une gaine isolante (7).

4. Vitre selon la revendication 1 ou 2, où le câble de connexion (5) est une bande tissée plate et l'élément de raidissement est une barre de renforcement (8).

5. Vitre selon la revendication 4, où la glissière de renforcement (8) contient un métal ou un alliage métallique, de préférence de l'acier, de l'acier inoxydable, du cuivre, de l'aluminium, de l'argent, de l'or, du tungstène, du zinc ou du laiton, et présente une épaisseur de matériau de 0,1 mm à 2 mm, de préférence de 0,2 mm à 1 mm.

6. Vitre selon l'une des revendications 1 à 5, où le câble de raccordement (5) a une longueur supérieure à 2 cm, de préférence supérieure à 3 cm, de manière particulièrement préférée supérieure à 4 cm, et de manière tout particulièrement préférée supérieure à 5 cm.

7. Vitre selon l'une des revendications 1 à 6, où le câble de raccordement (5) maintient automatiquement l'angle d'attaque (a) dans une plage entre 30° et 60°.

8. Vitre selon l'une des revendications 1 à 7, où le câble de raccordement (5) présente une fiche (10) à son extrémité éloignée de l'élément de connexion (3).

9. Vitre selon l'une des revendications 1 à 8, où la différence entre le coefficient de dilatation thermique du substrat (1) et le coefficient de dilatation thermique de l'élément de raccordement (3) est inférieure à 5 x 10⁻⁶/°C.

10. Vitre selon l'une des revendications 1 à 9, où le substrat (1) contient du verre, de préférence du verre sodocalcique.

11. Vitre selon l'une quelconque des revendications 1 à 10, où le substrat (1) contient un alliage contenant du fer, de préférence un acier contenant du chrome.

12. Vitre selon l'une des revendications 1 à 11, où la masse de soudure (4) est sans plomb.

13. Vitre selon l'une des revendications 1 à 12, où la structure conductrice d'électricité (2) contient au moins de l'argent, de préférence des particules d'argent et des frittes de verre, et présente une épaisseur de couche de 5 µm à 40 µm.

14. Procédé de fabrication d'une vitre avec au moins un élément de connexion électrique selon l'une des revendications 1 à 13, où
a)
- le câble de raccordement (5) est muni de l'élément de raidissement (7, 8) et du tuyau rétractable (6) et est relié à l'élément de raccordement (3) et
- une masse de soudure (4) est fixée à l'élément de raccordement (3),
b) l'élément de connexion (3) est disposé sur la structure conductrice d'électricité (2) sur le substrat (1)
et
c) l'élément de connexion (3) est relié à la structure conductrice d'électricité (2) par l'intermédiaire de la masse de soudure (4) avec un apport d'énergie.

15. Utilisation d'une vitre avec au moins un élément de raccordement électrique selon l'une des revendications 1 à 13, dans des bâtiments ou dans des moyens de transport pour la circulation sur terre, dans les airs ou sur l'eau, en particulier dans des véhicules ferroviaires ou automobiles, de préférence comme pare-brise, lunette arrière, fenêtre latérale et/ou fenêtre de toit, en particulier comme vitre chauffante ou comme vitre avec fonction d'antenne.
